# EUROPEAN PATENT APPLICATION

(11) **EP 2 050 801 A1**
(43) Date of publication of application: **22.04.2009**
(21) Application number: 07792192.2
(22) Date of filing: 08.08.2007
(51) Int. Cl.: C09J 7/02, B32B 27/00, B65H 19/28, B65H 75/28

(54) **DOUBLE-FACED PRESSURE-SENSITIVE ADHESIVE TAPE OR SHEET AND ROLL OF CONTINUOUS STRIP**

(30) Priority: 11.08.2006 JP 2006219966; 09.07.2007 JP 2007179937
(71) Applicant: NITTO DENKO CORPORATION, Ibaraki, Osaka 587-8680 (JP)
(72) Inventor: TAMAI, Hironori, Osaka 567-8680 (JP); SOEDA, Yoshikazu, Osaka 567-8680 (JP)
(74) Representative: Grünecker, Kinkeldey, Stockmair & Schwanhäusser Anwaltssozietät
(86) International application number: PCT/JP2007/065524
(87) International publication number: WO 2008/018504

(57) **Abstract**

Disclosed is a double-faced pressure-sensitive adhesive tape or sheet including a substrate and, respectively arranged on both sides thereof, two pressure-sensitive adhesive layers. The thickness from the surface of one of the.two pressure-sensitive adhesive layers to that of the other pressure-sensitive adhesive layer is 25 µm or less. The two pressure-sensitive adhesive layers have different adhesive strengths, and a pressure-sensitive adhesive layer having a lower adhesive strength has a tack in terms of ball number 3 or greater as determined according to the inclined type ball tack testing method specified in JIS Z 0237 at an inclination angle of 30°, a temperature of 23°C, and relative humidity of 65%. The substrate preferably has a thickness of 10 µm or less and more preferably has a thickness of 3 µm or less. Each of the two pressure-sensitive adhesive layers preferably has a thickness of 6 µm or less. The double-faced pressure-sensitive adhesive tape or sheet is thin, can securely affix adherends when applied, and can be easily separated from one of the adherends when peeled off.

## Description

### Technical Field

The present invention relates to a double-faced pressure-sensitive adhesive tape or sheet, and a roll of continuous strip using the same.

### Background Art

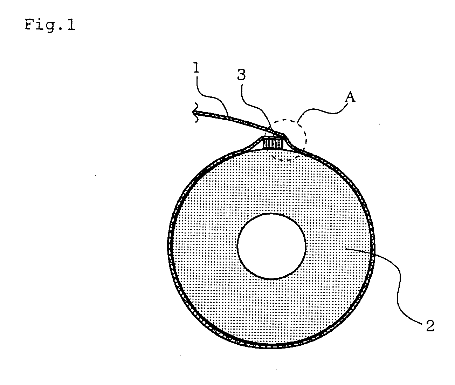

Continuous strips such as long, narrow films are generally supplied as products each in the form of a roll wound around a core. A double-faced pressure-sensitive adhesive tape or sheet may be used for the fixation of the winding origin of the continuous strip to the core (double-faced pressure-sensitive adhesive tape or sheet for fixing winding origin). When a double-faced pressure-sensitive adhesive tape or sheet for fixing winding origin is used, a roll of continuous strip is produced by fixing the inner end (winding origin) of the continuous strip to the core with the interposition of the double-faced pressure-sensitive adhesive tape or sheet and then winding the continuous strip around the core. However, when a continuous strip is wound around a core using such a double-faced pressure-sensitive adhesive tape or sheet for fixing winding origin, difference in thickness is formed at the winding origin of the continuous strip due to the thicknesses of the continuous strip and the double-faced pressure-sensitive adhesive tape or sheet as illustrated in Fig. 1 (the difference in thickness is due particularly to the thickness of the double-faced pressure-sensitive adhesive tape or sheet). The continuous strip, when wound around the core, warps and deforms at the difference in thickness so as to be stamped into the shape of the difference in thickness. This impedes the formation of a flat sheet. Additionally, the stamped shape of difference in thickness may remain and appear over and over again in the roll. These deformed portions of the continuous strip are difficult to use and should thereby be discarded. In addition, when the continuous strip is industrially used, not only the deformed portions but also portions between the deformed portions should be discarded. Namely, when the continuous strip is unwound, portions from the first deformed portion to the inner end should be discarded. These adverse effects are significant when the continuous strip is a thin article such as a thin film, and, in some cases, 100 m or more of inner wound portions of the continuous strip may be discarded, while the length of discarded portions may vary depending typically on the diameter of the core. Thus, the product is obtained in a low yield.

Fig. 1 schematically illustrates the shape of a difference in thickness formed upon winding of a continuous strip around a core. In Fig. 1, "1" stands for a continuous strip, "2" stands for a core, "3" stands for a double-faced pressure-sensitive adhesive tape or sheet for fixing winding origin, and "A" stands for a winding origin of the continuous strip 1. In Fig. 1, the inner end (winding origin) of the continuous strip 1 is affixed to the surface (outer surface) of the core 2 through the double-faced pressure-sensitive adhesive tape or sheet 3 and is then wound around the circumference surface of the core 2. In this process, difference in thickness is formed at the winding origin A of the continuous strip 1 due to the thicknesses of the continuous strip 1 and the double-faced pressure-sensitive adhesive tape or sheet 3. The continuous strip 1 wound over the difference in thickness deforms so as to stamped as following the shape of difference in thickness.

As a possible solution to solve this problem, there is proposed a double-faced pressure-sensitive adhesive tape or sheet for fixing winding origin, which has a total thickness of 10 µm or less, where the total thickness is the thickness from the surface of one of two pressure-sensitive adhesive layers to that of the other pressure-sensitive adhesive layer (see Patent Document 1). In this connection, double-faced pressure-sensitive adhesive tapes or sheets generally used for fixing winding origin are double-faced pressure-sensitive adhesive tapes or sheets each having a structure, in which two pressure-sensitive adhesive layers are arranged respectively on both sides of a substrate (substrate-supported double-faced pressure-sensitive adhesive tapes or sheets). This structure enables the continuous strip to be separated from the core. Thus the core and the continuous strip are recovered separately.

Double-faced pressure-sensitive tapes or sheets may also be used for the fixation of components in electronic devices of miniature size, such as so-called "cellular phones" and "digital cameras" (electronic still video cameras). Such miniature electronic devices recently have smaller and smaller thicknesses, and double-faced pressure-sensitive adhesive tapes or sheets for use therein should have smaller and smaller thicknesses.

Patent Document 1: Japanese Unexamined Utility Model Registration Application Publication (JP-U) No. Hei 7-6252

### Disclosure of Invention

### Problems to be Solved by the Invention

A core for use in winding of a continuous strip is desirably one that is not discarded but can be reused (recycled) after unwinding the wound continuous strip, from the viewpoints of cost efficiency and resource savings. Particularly when the core is an expensive article having a special structure, a strong demand is made to reuse the core. Accordingly, a double-faced pressure-sensitive adhesive tape or sheet for fixing winding origin is desirably one that can be easily separated from the core in such a manner that the core is reusable. The winding origin of such a continuous strip is generally discarded because of the difference in thickness.

When used for the affixation between two components as adherends in miniature electronic devices, a double-faced pressure-sensitive adhesive tape or sheet may be desirably separated from one of the adherends to enable the one adherend to be reused, in the cases when the tape or sheet is affixed in a wrong way and the affixation must be reworked or when the miniature electronics are discarded but from which components are to be recovered and reused (recycled).

In a substrate-supported double-faced pressure-sensitive adhesive tape or sheet merely having a small thickness, such as the double-faced pressure-sensitive adhesive tape or sheet for fixing winding origin disclosed in JP-U No. Hei 7-6252, two pressure-sensitive adhesive layers arranged respectively on both sides of a substrate generally have an equal or substantially equal adhesive strengths. Accordingly, when the pressure-sensitive adhesive layers are designed to have lower adhesive strengths so as to be separated from an adherend such as a core or a miniature electronic device component, the two pressure-sensitive adhesive layers inevitably have lower adhesive strengths, and this impedes secure affixation of the adherends. In contrast, when the pressure-sensitive adhesive layers of a double-faced pressure-sensitive adhesive tape or sheet are designed to have higher adhesive strengths so as to enable secure affixation of adherends, the two pressure-sensitive adhesive layers inevitably have higher adhesive strengths, and this impedes easy removal of the double-faced pressure-sensitive adhesive tape or sheet from an adherend. In this case, if the double-faced pressure-sensitive adhesive tape or sheet is peeled off by force, the ingredients of the pressure-sensitive adhesive may remain on the surface of the adherends such as a core or miniature electronic device component, or the adherends may be broken. This impedes reuse of the adherends.

Thus, demands have been made to provide a double-faced pressure-sensitive adhesive tape or sheet that not only has a small total thickness (i.e., the thickness extending from the surface of one of the two pressure-sensitive adhesive layers to the surface of the other pressure-sensitive adhesive layer), but also can be affixed securely to two adherends when applied and can be separated from one of the two adherends in such a manner that the one adherend is reusable when the tape or sheet is applied in a wrong way or when the one adherend is to be reused.

Accordingly, an object of the present invention is to provide a double-faced pressure-sensitive adhesive tape or sheet that has a small thickness, enables secure affixation between two adherends when applied, and can be easily separated from one of the two adherends when peeled off.
Another object of the present invention is to provide a double-faced pressure-sensitive adhesive tape or sheet which is useful as a double-faced pressure-sensitive adhesive tape or sheet for fixing the winding origin of a continuous strip to be wound around a core, which tape or sheet gives a higher yield of the continuous strip and can be easily separated from the core. Yet another object of the present invention is to provide a roll of continuous strip using the double-faced pressure-sensitive adhesive tape or sheet. Means for Solving the Problems

After intensive investigations to achieve the objects, the present inventors have found that a substrate-supported double-faced pressure-sensitive adhesive tape or sheet having a specific structure and specific properties, if used for fixing the winding origin of a continuous strip to be wound around a core, can effectively reduce the magnitude of the difference in thickness at the winding origin and enables winding of the continuous strip around the core while ensuring secure affixation of the continuous strip to the core. They have also found that the double-faced pressure-sensitive adhesive tape or sheet can be easily separated from the core without damaging the core after the continuous strip is unwound from the core. The present invention has been made based on these findings.

Specifically, according to the present invention, there is provided a double-faced pressure-sensitive adhesive tape or sheet which includes a substrate and, respectively arranged on both sides thereof, two pressure-sensitive adhesive layers, in which the thickness extending from the surface of one of the two pressure-sensitive adhesive layers to the surface of the other pressure-sensitive adhesive layer is 25 µm or less, the two pressure-sensitive adhesive layers have different adhesive strengths, and, out of the two pressure-sensitive adhesive layers, one having a lower adhesive strength (lower-adhesive-strength pressure-sensitive adhesive layer) has a tack in terms of ball number 3 or greater as determined according to the inclined type ball tack testing method specified in Japanese Industrial Standards (JIS) Z 0237 at an inclination angle of 30°, a temperature of 23°C, and relative humidity of 65%.

In the double-faced pressure-sensitive adhesive tape or sheet, the lower-adhesive-strength pressure-sensitive adhesive layer preferably has an adhesive strength of 0.05 to 10.0 N/20 mm as determined according to JIS Z 0237 using a SUS 304 steel plate as a test panel at a tensile speed of 300 mm/minute, a peel angle of 180°, a temperature of 23°C, and relative humidity of 65%, and the other pressure-sensitive adhesive layer having a higher adhesive strength (higher-adhesive-strength pressure-sensitive adhesive layer) preferably has an adhesive strength of 2.0 to 30.0 N/20 mm as determined according to JIS Z 0237 using a SUS 304 steel plate as a test panel at a tensile speed of 300 mm/minute, a peel angle of 180°, a temperature of 23°C, and relative humidity of 65%.

In the double-faced pressure-sensitive adhesive tape or sheet, the substrate preferably has a thickness of 10 µm or less. It is more preferred that the substrate has a thickness of 3 µm or less and each of the pressure-sensitive adhesive layers independently has a thickness of 6 µm or less. The substrate and/or at least one of the pressure-sensitive adhesive layers may be colored.

In the pressure-sensitive adhesive tape or sheet, the surface of at least one of the pressure-sensitive adhesive layers may be protected by a colored separator before use.

Examples of such double-faced pressure-sensitive adhesive tapes or sheets include a double-faced pressure-sensitive adhesive tape or sheet for fixing the inner end of a continuous strip to a core before winding the continuous strip around the core. In this case, the tape or sheet is preferably arranged so that the lower-adhesive-strength pressure-sensitive adhesive layer is adjacent to or faces the core.

According to another embodiment of the present invention, there is provided a roll of continuous strip, which includes a core and a continuous strip wound around the core, in which the inner end of the continuous strip is fixed to the core through the above-mentioned double-faced pressure-sensitive adhesive tape or sheet, and the double-faced pressure-sensitive adhesive tape or sheet is arranged so that the lower-adhesive-strength pressure-sensitive adhesive layer is adjacent to the core. In the roll of continuous strip, the continuous strip is preferably an optically functional plastic film or sheet.

### Advantages

The double-faced pressure-sensitive adhesive tape or sheet according to the present invention has the above configuration, thereby has a small thickness, enables secure affixation between two adherends when applied, and can be easily separated or removed from one of the two adherends when peeled off.

Accordingly, the double-faced pressure-sensitive adhesive tape or sheet is useful as a double-faced pressure-sensitive adhesive tape or sheet for fixing the winding origin of a continuous strip to be wound around a core, which can give a continuous strip in a higher yield and can be easily separated or peeled off from the core. On one hand, the tape or sheet helps the continuous strip to reduce the amount of inner portions of the roll of continuous strip to be discarded to thereby achieve cost reduction and resource savings effectively. On the other hand, the tape or sheet helps the core to be reused to thereby achieve cost reduction and resource savings effectively.

### Brief Description of Drawings

[Fig. 1] Fig. 1 is a schematic diagram illustrating the shape of difference in thickness formed when a continuous strip is wound around a core. Reference Numerals

- 1: continuous strip
- 2: core
- 3: double-faced pressure-sensitive adhesive tape or sheet for fixing winding origin
- A: winding origin of continuous strip 1

### Best Modes for Carrying Out the Invention

A double-faced pressure-sensitive adhesive tape or sheet according to the present invention has a structure in which two pressure-sensitive adhesive layers are arranged respectively on both sides of a substrate. In the tape or sheet, the thickness extending from the surface (adhesive face) of one of the two pressure-sensitive adhesive layers to the surface (adhesive face) of the other pressure-sensitive adhesive layer is 25 µm or less, the two pressure-sensitive adhesive layers have different adhesive strengths, and the pressure-sensitive adhesive layer having a lower adhesive strength (lower-adhesive-strength pressure-sensitive adhesive layer) has a tack in terms of ball number 3 or greater as determined according to the inclined type ball tack testing method specified in JIS Z 0237, at an inclination angle of 30°, a temperature of 23°C, and relative humidity of 65%.

As has been described, even though being a substrate-supported double-faced pressure-sensitive adhesive tape or sheet, the double-faced pressure-sensitive adhesive tape or sheet according to the present invention has a thickness (total thickness) extending from one adhesive face to the other adhesive face of 25 µm or less and thereby has a smaller thickness than those of common double-faced pressure-sensitive adhesive tape or sheets. The tape or sheet, if used as a double-faced pressure-sensitive adhesive tape or sheet for fixing the winding origin of a continuous strip to be wound around a core, can effectively reduce the height of difference in thickness at the winding origin upon winding to thereby reduce the length of deformed portions of inner portions (initially wound portions) in the roll of continuous strip effectively. In addition, the tape or sheet, if used typically in a miniature electronic device, namely, when used as a double-faced pressure-sensitive adhesive tape or sheet for a miniature electronic device, can effectively reduce the thickness of the resulting electronic device. This will contribute to thickness reduction of such miniature electronic devices.

Accordingly, the double-faced pressure-sensitive adhesive tape or sheet according to the present invention, if used for fixing the winding origin of a continuous strip to be wound around a core, helps to reduce the amount of discarded portions of the continuous strip, thereby increases the amount of usable portions of the continuous strip, and effectively improves the yield of the product continuous strip, even when the continuous strip is a thin film or sheet. In particular, when the continuous strip is an expensive film-like article such as a polarizing plastic film or sheet or another optically functional plastic film or sheet, the double-faced pressure-sensitive adhesive tape or sheet effectively contributes to cost reduction, because it can improve the yield of the product continuous strip, namely, it can increase the amount of usable portions of the expensive film-like article, as compared to known equivalents. The double-faced pressure-sensitive adhesive tape or sheet is no doubt superior also in resource savings.

In addition, in the double-faced pressure-sensitive adhesive tape or sheet, the two pressure-sensitive adhesive layers have different adhesive strengths, and the pressure-sensitive adhesive layer having a lower adhesive strength has a tack in terms of ball number 3 or greater as determined according to the inclined type ball tack testing method specified in JIS Z 0237 at an inclination angle of 30°, a temperature of 23°C, and relative humidity of 65%. The double-faced pressure-sensitive adhesive tape or sheet thereby enables secure affixation between two adherends. Additionally, the double-faced pressure-sensitive adhesive tape or sheet, if to be separated after affixation, can be easily separated from one of the two adherends without remaining pressure-sensitive adhesive ingredients on the surface of the adherend or without causing breakage of the adherend. Thus, the tape or sheet can be separated from the one adherend in such a manner that the one adherend is reusable.

Consequently, in an embodiment, if used for fixing the winding origin (inner end) of a continuous strip to a core, the double-faced pressure-sensitive adhesive tape or sheet can be easily separated from the core in such a manner that the core is reusable, by arranging the double-faced pressure-sensitive adhesive tape or sheet so that the lower-adhesive-strength pressure-sensitive adhesive layer is adjacent to the core. Thus, the core can be effectively recovered and reused. In another embodiment, if used for fixing components in miniature electronic devices, the double-faced pressure-sensitive adhesive tape or sheet can be easily separated from a component to be reused in such a manner the component is reusable, by arranging the double-faced pressure-sensitive adhesive tape or sheet so that the lower-adhesive-strength pressure-sensitive adhesive layer is adjacent to the component to be reused. Thus, the component to be reused can be effectively recovered and reused.

The total thickness of the double-faced pressure-sensitive adhesive tape or sheet is not particularly limited, as long as being 25 µm or less, but is preferably 20 µm or less, more preferably 18 µm or less, further preferably 15 µm or less, and particularly preferably 12 µm or less. The double-faced pressure-sensitive adhesive tape or sheet, if having an excessively small total thickness, may be hardly separated from an adhered such as a core or a miniature electronic device component or may have insufficient adhesive strengths. The total thickness of the double-faced pressure-sensitive adhesive tape or sheet, regarding its lower limit, is preferably, for example, 3 µm or more, more preferably 5 µm or more, further preferably 7 µm or more, and particularly preferably 8 µm or more.

The total thickness of the double-faced pressure-sensitive adhesive tape or sheet can be naturally selected within such a range between a suitable combination of the upper limit and the lower limit. For example, the total thickness may be within a range of from 3 to 25 µm. When used for fixing winding origin, the total thickness of the double-faced pressure-sensitive adhesive tape or sheet is preferably from 7 to 15 µm and more preferably from 8 to 12 µm. When having a thickness within this range, the double-faced pressure-sensitive adhesive tape or sheet is very superior in balance among its properties. Specifically, the double-faced pressure-sensitive adhesive tape or sheet effectively reduces the height of the difference in thickness at the winding origin of a continuous strip to be wound around a core, can be easily separated from the core, and ensures secure affixation between the continuous strip and the core.

The total thickness of the double-faced pressure-sensitive adhesive tape or sheet is set to be 25 µm or less. It is therefore important to set the thicknesses of the substrate and of the two pressure-sensitive adhesive layers arranged on both sides of the substrate so that the total thickness is 25 µm or less. Specifically, the thickness of the substrate can be suitably set within ranges of, for example, 10 µm or less, preferably 8 µm or less, more preferably 5 µm or less, further preferably 3 µm or less, and particularly preferably 2.5 µm or less. A substrate, if having an excessively small thickness, may be broken to impede the production (to reduce the productivity). The thickness of the substrate, in terms of its lower limit, is preferably, for example, 1 µm or more, more preferably 1.2 µm or more, further preferably 1.5 µm or more, and particularly preferably 1.8 µm or more. As a matter of course, the thickness of the substrate can be selected within such a range between a suitable combination of the upper limit and the lower limit. For example, the thickness of the substrate may be from 1 to µm. The substrate may have a single layer structure or multilayer structure.

The thickness of each of the pressure-sensitive adhesive layers (a pressure-sensitive adhesive layer arranged on one side of the substrate, and another pressure-sensitive adhesive layer arranged on the other side) can be independently selected within ranges of, for example, 10 µm or less (preferably 8 µm or less, more preferably 7 µm or less, further preferably 6 µm or less, and particularly preferably 5 µm or less. A pressure-sensitive adhesive layer, if being excessively thin, may not exhibit satisfactory adhesion. The thickness of each of the pressure-sensitive adhesive layers, in terms of its lower limit, is therefore, for example,' preferably 1 µm or more, more preferably 1.5 µm or more, further preferably 2 µm or more, and particularly preferably 3 µm or more. The thickness of each pressure-sensitive adhesive layer can be naturally selected within such a range between a suitable combination of the upper limit and the lower limit. For example, the thickness may be from 1 to 10 µm.

The two pressure-sensitive adhesive layers may have the same or different thicknesses. Each of the pressure-sensitive adhesive layers may independently have a single layer structure or multilayer structure.

In a double-faced pressure-sensitive adhesive tape or sheet according to a preferred embodiment of the present invention, the substrate has a thickness of 3 µm or less (e.g., 1 to 3 µm) and each of the pressure-sensitive adhesive layers independently has a thickness of 6 µm or less (e.g., 2 to 6 µm). In a double-faced pressure-sensitive adhesive tape or sheet according to a more preferred embodiment, the substrate has a thickness of 2.5 µm or less (e.g., 1.5 to 2.5 µm) and each of the pressure-sensitive adhesive layers independently has a thickness of 5 µm or less (e.g., 3 to 5 µm).

In double-faced pressure-sensitive adhesive tape or sheets according to the present invention, the two pressure-sensitive adhesive layers on both sides of the substrate have different adhesive strengths. Of the pressure-sensitive adhesive layers, a pressure-sensitive adhesive layer having a lower adhesive (lower-adhesive-strength pressure-sensitive adhesive layer) has any tack, as long as being a tack in terms of ball number 3 or greater (i.e., from ball number 3 to ball number 32) as determined according to the inclined type ball tack testing method specified in JIS Z 0237 at an inclination angle (angle of inclined plate) of 30°, a temperature of 23°C, and relative humidity of 65%. The tack is preferably ball number 4 or greater, and more preferably ball number 5 or greater. The upper limit of the tack of the lower-adhesive-strength pressure-sensitive adhesive layer has only to be ball number 32 or smaller. However, an excessively high tack may cause excessive stickiness, and the tack is preferably ball number 16 or smaller, and more preferably ball number 10 or smaller.

Regarding a tack determined according to the inclined type ball tack testing method specified in JIS Z 0237, a larger ball number (ball No.) means a stronger tack. Accordingly, the fact that the lower-adhesive-strength pressure-sensitive adhesive layer in a double-faced pressure-sensitive adhesive tape or sheet has a tack in terms of ball number 3 or greater (as determined according to the inclined type ball tack testing method specified in JIS Z 0237; at an inclination angle of 30°, a temperature of 23°C, and relative humidity of 65%) means that the lower-adhesive-strength pressure-sensitive adhesive layer has a tack equivalent to or greater than a tack corresponding to the ball number 3.

Of the two pressure-sensitive adhesive layers on both sides of the substrate, the tack of the other pressure-sensitive adhesive layer having a higher adhesive strength (higher-adhesive-strength pressure-sensitive adhesive layer) is not particularly limited, and may be ball number 3 or greater as in that of the lower-adhesive-strength pressure-sensitive adhesive layer or may be ball number 2 or smaller (including "N/A" where no ball stops on the adhesive face), in which the tack is as determined according to the inclined type ball tack testing method specified in JIS Z 0237 at an inclination angle of 30°, a temperature of 23°C, and relative humidity of 65%.

The tacks of each of the pressure-sensitive adhesive layers (lower-adhesive-strength pressure-sensitive adhesive layer and higher-adhesive-strength pressure-sensitive adhesive layer) are measured in the following manner, according to the inclined type ball tack testing method specified in JIS Z 0237, at an inclination angle (angle of inclined plate) of 30°, a temperature of 23°C, relative humidity of 65%, a length of approach table of 100 mm, and a length of adhesive face of 100 mm. A test specimen of the double-faced pressure-sensitive adhesive tape or sheet is set with an adhesive face to be measured upward at the predetermined location of an inclined type ball tack device (rolling ball device; at an angle of inclined plate of 30°), and a poly(ethylene terephthalate) film for an approach table (the poly(ethylene terephthalate) film specified in JIS C 2318 of 25 µm thickness) is stuck at the predetermined location of the adhesive face of the double-faced pressure-sensitive adhesive tape or sheet so that the length of the exposed adhesive face be 100 mm. Depending on the size of a ball, the position of the center of the ball is adjusted to the ball start so that the length of the approach table constantly be 100 mm. The ball is then allowed to roll. These operations are repeated to find the maximum size ball which stops completely within the measuring part (i.e., on the adhesive face). Three balls of the found maximum size, the next larger and smaller size balls are allowed to roll each one time (i.e., a total of three times), to confirm that the found ball is the maximum one met to the specification of measurements. Thus, the tack in terms of ball number is measured.

The adhesive strengths of the two pressure-sensitive adhesive layers in the double-faced pressure-sensitive adhesive tape or sheets are not particularly limited, as long as differing from each other. In the double-faced pressure-sensitive adhesive tape or sheets, the adhesive strength of the lower-adhesive-strength pressure-sensitive adhesive layer is preferably 0.05 to 10.0 N/20 mm, more preferably 0.1 to 5.0 N/20 mm, and particularly preferably 0.2 to 2.0 N/20 mm, as determined according to JIS Z 0237; using a SUS 304 steel plate as a test panel at a tensile speed of 300 mm/minute, a peel angle of 180°, a temperature of 23°C, and relative humidity of 65%. The adhesive strength of the higher-adhesive-strength pressure-sensitive adhesive layer is 2.0 to 30.0 N/20 mm, more preferably 4.0 to 30.0 N/20 mm, further preferably 6.0 to 25.0 N/20 mm, and particularly preferably 7.0 to 20.0 N/20 mm, as determined according to JIS Z 0237; using a SUS 304 steel plate as a test panel at a tensile speed of 300 mm/minute, a peel angle of 180°, a temperature of 23°C, and relative humidity of 65%.

The adhesive strengths (as measured at a temperature of 23°C, relative humidity of 65%, a peel angle of 180°, and at a tensile speed of 300 mm/min) of the pressure-sensitive adhesive layers (lower-adhesive-strength pressure-sensitive adhesive layer and higher-adhesive-strength pressure-sensitive adhesive layer) are defined as values measured in the following manner. Initially, an adhesive face not to be tested is covered (lined) by a poly(ethylene terephthalate) film of 25 µm thickness. A stainless steel sheet (SUS 304BA steel plate) is stuck to the adhesive face to be tested by passing a roller of 2.0 kg mass thereon in one reciprocation motion, and the test panel to which the test specimen is stuck is allowed to stand still in an atmosphere of 23°C temperature and 65% relative humidity for 30 minutes. Then peeling (180° peel) is conducted at a speed of 300 mm/minute and an angle of 180° to measure stress when peeled off. The maximum (maximum value excluding the peak top at early stages of measurement) and the minimum in stress are read out, and the average of the maximum and minimum is defined as the adhesive strength (in units of N/20 mm).

(Substrate)
Substrates for use in double-faced pressure-sensitive adhesive tapes or sheets according to the present invention can be any substrates such as plastic substrates, metal substrates, fibrous substrates, and paper substrates, of which plastic substrates are preferred from the viewpoints typically of strength, precision in thickness, and slimness. Exemplary materials of such plastic substrates include, but are not limited to, polyesters such as poly(ethylene terephthalate)s, poly(ethylene naphthalate)s, poly(butylene terephthalate)s, and poly(butylene naphthalate)s; polyolefins such as polyethylenes, polypropylenes, and ethylene-propylene copolymers; poly(vinyl alcohol)s; poly(vinylidene chloride)s; poly(vinyl chloride)s; vinyl chloride-vinyl acetate copolymers; poly(vinyl acetate)s; polyamides; polyimides; celluloses; fluorine-containing resins; poly ethers; styrenic resins such as polystyrenes; polycarbonates; and poly(ether sulfone)s. Each of different materials may be used alone or in combination.

Polyester substrates such as poly(ethylene terephthalate) substrates are preferably used as the substrate herein.

Where necessary, the substrate may further contain any known additives such as fillers, flame retardants, age inhibitors, antistatic agents, softeners, ultraviolet-absorbers, antioxidants, plasticizers, and surfactants.

### (Pressure-Sensitive Adhesive Layers)

The two pressure-sensitive adhesive layers (lower-adhesive-strength pressure-sensitive adhesive layer and higher-adhesive-strength pressure-sensitive adhesive layer) on both sides of the substrate in the double-faced pressure-sensitive adhesive tapes or sheets are generally composed of pressure-sensitive adhesives of different compositions, because the two layers have different adhesive strengths.
In this connection, the two pressure-sensitive adhesive layers may be composed of pressure-sensitive adhesives of the same kind or those of different kinds. Specifically, pressure-sensitive adhesives constituting the two pressure-sensitive adhesive layers may contain the same base polymer or base polymers of the same kind, or base polymers of different kinds.

More specifically, exemplary pressure-sensitive adhesives for constituting the pressure-sensitive adhesive layers include acrylic pressure-sensitive adhesives, rubber pressure-sensitive adhesives, urethane pressure-sensitive adhesives, silicone pressure-sensitive adhesives, polyester pressure-sensitive adhesives, polyamide pressure-sensitive adhesives, epoxy pressure-sensitive adhesives, vinyl alkyl ether pressure-sensitive adhesives, and fluorine-containing pressure-sensitive adhesives. Each of different pressure-sensitive adhesives respectively for constituting the pressure-sensitive adhesive layers may be used alone or in combination. Each of pressure-sensitive adhesives respectively for constituting the pressure-sensitive adhesive layers may be a pressure-sensitive adhesive of any form. Specifically, it may be, for example, an emulsion pressure-sensitive adhesive, a solvent-based pressure-sensitive adhesive, or a hot-melt pressure-sensitive adhesive.

Preferred as pressure-sensitive adhesives for constituting the pressure-sensitive adhesive layers are acrylic pressure-sensitive adhesives and rubber pressure-sensitive adhesives, of which acrylic pressure-sensitive adhesives are more preferred. As used herein an "acrylic pressure-sensitive adhesive" refers to a pressure-sensitive adhesive that contains an acrylic polymer as a main ingredient or base polymer; and a "rubber pressure-sensitive adhesive" refers to a pressure-sensitive adhesive that contains a rubber component as a main ingredient or base polymer. Of acrylic polymers as base polymers in acrylic pressure-sensitive adhesives, preferred are acrylic polymers using one or more (meth)acrylic acid alkyl esters (acrylic acid alkyl esters or methacrylic acid alkyl esters) as main monomer components. As long as containing one or more (meth)acrylic acid alkyl esters as main monomer components, acrylic polymers may further contain, as monomer components, one or more other monomer components that are copolymerizable with the (meth)acrylic acid alkyl esters (hereinafter also referred to as "copolymerizable monomer components"). Such copolymerizable monomer components can be suitably selected from among known monomer components that are other than (meth)acrylic acid alkyl esters but are copolymerizable with (meth)acrylic acid alkyl esters.

Exemplary (meth)acrylic acid alkyl esters include methyl (meth)acrylates, ethyl (meth)acrylate, propyl (meth)acrylates, isopropyl (meth)acrylates, butyl (meth)acrylates, isobutyl (meth)acrylates, s-butyl (meth)acrylates, t-butyl (meth)acrylates, pentyl (meth)acrylates, isoamyl (meth)acrylates, neopentyl (meth)acrylates, hexyl (meth)acrylates, heptyl (meth)acrylates, 2-ethylhexyl (meth)acrylates, octyl (meth)acrylates, isooctyl (meth)acrylates, nonyl (meth)acrylates, isononyl (meth)acrylates, decyl (meth)acrylates, isodecyl (meth)acrylates, undecyl (meth)acrylates, and dodecyl (meth)acrylates.

Among copolymerizable monomer components, functional group-containing monomer components are used for introducing crosslinking points into acrylic polymers. Exemplary functional group-containing monomer components include carboxyl-containing monomers such as (meth)acrylic acids, itaconic acid, crotonic acid, maleic acid, fumaric acid, and isocrotonic acid, and acid anhydrides of them, such as maleic anhydride and itaconic anhydride; hydroxyl-containing monomers including hydroxyalkyl (meth)acrylates such as 2-hydroxyethyl (meth)acrylates, 2-hydroxypropyl (meth)acrylates, and 2-hydroxybutyl (meth)acrylates, as well as other hydroxyl-containing monomers such as vinyl alcohol and allyl alcohol; amide monomers such as (meth)acrylamides, N,N-dimethyl(meth)acrylamides, N-butyl(meth)acrylamides, N-methylol(meth)acrylamides, N-methylolpropane(meth)acrylamides, N-methoxymethyl(meth)acrylamides, and N-butoxymethyl(meth)acrylamides; amino-containing monomers such as aminoethyl (meth)acrylates, N,N-dimethylaminoethyl (meth)acrylates, and t-butylaminoethyl (meth)acrylates; epoxy-containing monomers such as glycidyl (meth)acrylates and methylglycidyl (meth)acrylates; cyano-containing monomers such as acrylonitrile and methacrylonitrile; and monomers having a nitrogen-containing ring, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholines. Of functional group-containing monomer components, carboxyl-containing monomers, such as acrylic acid, and acid anhydrides thereof are preferably used.

Exemplary copolymerizable monomer components further include vinyl ester monomers such as vinyl acetate and vinyl propionate; styrenic monomers such as styrene, substituted styrenes (e.g., α-methylstyrene), and vinyltoluene; (meth)acrylic acid esters containing a nonaromatic ring, including (meth)acrylic acid cycloalkyl esters such as cyclohexyl (meth)acrylates and cyclopentyl di(meth)acrylates, as well as bornyl (meth)acrylates and isobornyl (meth)acrylates; (meth)acrylic acid esters containing an aromatic ring, including (meth)acrylic acid aryl esters such as phenyl (meth)acrylates, as well as (meth)acrylic acid aryloxyalkyl esters such as phenoxyethyl (meth)acrylates, and (meth)acrylic acid aralkyl esters such as benzyl (meth)acrylates; olefinic monomers such as ethylene, propylene, isoprene, butadiene, and isobutylene; vinyl chloride, vinylidene chloride; isocyanato-containing monomers such as 2-(meth)acryloyloxyethyl isocyanate; alkoxy-containing monomers such as methoxyethyl (meth)acrylates and ethoxyethyl (meth)acrylates; vinyl ether monomers such as methyl vinyl ether and ethyl vinyl ether; and polyfunctional monomers such as 1,6-hexanediol di(meth)acrylates, ethylene glycol di(meth)acrylates, diethylene glycol di(meth)acrylates, triethylene glycol di(meth)acrylates, tetraethylene glycol di(meth)acrylates, (poly)ethylene glycol di(meth)acrylates, propylene glycol di(meth)acrylates, (poly)propylene glycol di(meth)acrylates, neopentyl glycol di(meth)acrylates, pentaerythritol di(meth)acrylates, trimethylolpropane tri(meth)acrylates, pentaerythritol tri(meth)acrylates, dipentaerythritol hexa(meth)acrylates, glycerol di(meth)acrylates, epoxyacrylates, polyester acrylates, urethane acrylates, divinylbenzene, butyl di(meth)acrylates, and hexyl di(meth)acrylates.

Pressure-sensitive adhesives for constituting the pressure-sensitive adhesive layers may further contain, according to necessity, any known additives and other components, such as crosslinking agents, cross-linkers, tackifying resins, fillers, flame retardants, age inhibitors, antistatic agents, softeners, ultraviolet-absorbers, antioxidants, plasticizers, and surfactants.

Particularly, pressure-sensitive adhesives, represented by acrylic pressure-sensitive adhesives, for constituting the pressure-sensitive adhesive layers preferably contain a crosslinking agent and/or a tackifying resin so as to control the adhesive strengths and tacks of the resulting pressure-sensitive adhesive layers. Namely, in this case, the adhesive strengths and tacks of the respective pressure-sensitive adhesive layers can be effectively and easily controlled by adjusting the type and amount of the crosslinking agent and the type and amount of the tackifying resin.

Specifically, the lower-adhesive-strength pressure-sensitive adhesive layer has a low adhesive strength and a high tack and is thereby preferably composed of an acrylic pressure-sensitive adhesive composition containing an acrylic polymer as a main ingredient (base polymer). More specifically, the characteristic properties can be exhibited by adjusting the type and amount of a crosslinking agent to be used in the acrylic pressure-sensitive adhesive composition. Of such acrylic pressure-sensitive adhesive compositions, preferred is an acrylic pressure-sensitive adhesive composition containing a combination of one or more isocyanate crosslinking agents with one or more epoxy crosslinking agents.

In the acrylic pressure-sensitive adhesive composition just mentioned above, the content of isocyanate crosslinking agents is preferably 0.5 to 3.0 parts by weight, and more preferably 1.0 to 2.0 parts by weight, to 100 parts by weight of the base polymer; and the content of epoxy crosslinking agents is preferably 0.05 to 0.5 parts by weight, and more preferably 0.1 to 0.2 parts by weight, to 100 parts by weight of the base polymer.

In contrast, the higher-adhesive-strength pressure-sensitive adhesive layer has a high adhesive strength and is preferably composed of an acrylic pressure-sensitive adhesive composition containing one or more tackifying resins of every kind. The content of tackifying resins in the pressure-sensitive adhesive composition is preferably 5 to 40 parts by weight, and more preferably 20 to 30 parts by weight, to 100 parts by weight of the base polymer.

Crosslinking agents for use herein are not particularly limited and can be suitably selected from among known crosslinking agents. Exemplary crosslinking agents include isocyanate crosslinking agents, epoxy crosslinking agents, melamine crosslinking agents, peroxide crosslinking agents, as well as urea crosslinking agents, metal alkoxide crosslinking agents, metal chelate crosslinking agents, metal salt crosslinking agents, carbodiimide crosslinking agents, oxazoline crosslinking agents, aziridine crosslinking agents, and amine crosslinking agents. Each of different crosslinking agents may be used alone or in combination.

Exemplary isocyanate crosslinking agents include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate; as well as a tolylene diisocyanate adduct of trimethylolpropane [supplied by Nippon Polyurethane Industry Co., Ltd. under the trade name of "CORONATE L"] and a hexamethylene diisocyanate adduct of trimethylolpropane [supplied by Nippon Polyurethane Industry Co., Ltd. under the trade name of "CORONATE HL"].

Exemplary epoxy crosslinking agents include N,N,N',N'-tetraglycidyl-m-xylenediamine, diglycidylaniline, 1,3-bis(N,N-glycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ethers, polypropylene glycol diglycidyl ethers, sorbitol polyglycidyl ethers, glycerol polyglycidyl ethers, pentaerythritol polyglycidyl ethers, polyglycerol polyglycidyl ethers, sorbitan polyglycidyl ethers, trimethylolpropane polyglycidyl ethers, diglycidyl adipate, diglycidyl o-phthalate, triglycidyl tris(2-hydroxyethyl)isocyanurate, resorcinol diglycidyl ether, and diglycidyl ether of bisphenol-S; and epoxy resins each having two or more epoxy groups per molecule.

Instead of or in addition to using crosslinking agents, the respective pressure-sensitive adhesive layers can also be formed by carrying out crosslinking through application typically of electron beams or ultraviolet rays.

Typically, when the pressure-sensitive adhesive layers are each composed of an acrylic pressure-sensitive adhesive, the amount of crosslinking agents can be selected within ranges of from 0.5 to 3.0 parts by weight and preferably from 1.0 to 2.0 parts by weight, to 100 parts by weight of the acrylic polymer as a base polymer.

Tackifier resins for use herein are not particularly limited and can be suitably selected from among known tackifying resins. Specifically, exemplary tackifying resins include rosin tackifying resins, terpene tackifying resins, phenol tackifying resins, hydrocarbon tackifying resins, ketone tackifying resins; as well as polyamide tackifying resins, epoxy tackifying resins, and elastomer tackifying resins. Each of different tackifying resins may be used alone or in combination.

Exemplary rosin tackifying resins include unmodified rosins (raw rosins) such as gum rosin, wood rosin, and tall oil rosin; modified rosins, such as polymerized rosins, stabilized rosins, disproportionated rosins, fully hydrogenised rosins, partially hydrogenised rosins, and other chemically modified rosins, each derived from these unmodified rosins via modification such as polymerization, disproportionation, or hydrogenation; and rosin derivatives of every kind. Exemplary rosin derivatives include rosin phenol resins prepared by adding phenol to rosins (unmodified rosins, modified rosins, and rosin derivatives) by the catalysis of an acid catalyst and carrying out thermal polymerization; rosin ester resins including rosin ester compounds (unmodified rosin esters) derived from unmodified rosins via esterification with alcohols, and modified rosin ester compounds, such as polymerized rosin esters, stabilized rosin esters, disproportionated rosin esters, fully hydrogenised rosin esters, and partially hydrogenised rosin esters, each derived from modified rosins (e.g., polymerized rosins, stabilized rosins, disproportionated rosins, fully hydrogenised rosins, and partially hydrogenised rosins) via esterification with alcohols; unsaturated fatty acid-modified rosin resins derived from unmodified rosins or modified rosins (e.g., polymerized rosins, stabilized rosins, disproportionated rosins, fully hydrogenised rosins, and partially hydrogenised rosins) via modification with unsaturated fatty acids; unsaturated fatty acid-modified rosin ester resins derived from rosin ester resins via modification with unsaturated fatty acids; rosin alcohol resins derived from unmodified rosins, modified rosins (e.g., polymerized rosins, stabilized rosins, disproportionated rosins, fully hydrogenised rosins, and partially hydrogenised rosins), unsaturated fatty acid-modified rosin resins, and unsaturated fatty acid-modified rosin ester resins, respectively, via reduction of carboxyl groups therein; and metal salts of rosin resins such as unmodified rosins, modified rosins, and rosin derivatives, of which metal slats of rosin ester resins are preferred.

Exemplary terpene tackifying resins include terpene resins such as α-pinene polymers, β-pinene polymers, and dipentene polymers; and modified terpene resins, such as terpene phenol resins, styrene-modified terpene resins, aromatic-modified terpene resins, and hydrogenated terpene resins, each derived from these terpene resins via modification such as modification with phenol, modification with aromatic compounds, modification via hydrogenation, and modification with hydrocarbons.

Exemplary phenolic tackifying resins include condensates of phenols (e.g., phenol, m-cresol, 3,5-xylenol, p-alkylphenols, and resorcinol) with formaldehyde, such as alkylphenol resins and xylene-formaldehyde resins; resols as addition products of the phenols with formaldehyde by the catalysis of a base catalyst; and novolaks as condensation products of the phenols with formaldehyde by the catalysis of an acid catalyst.

Exemplary hydrocarbon tackifying resins (petroleum tackifying resins) include aliphatic hydrocarbon resins including polymers of aliphatic hydrocarbons such as olefins and dienes each having four or five carbon atoms (e.g., olefins such as butene-1, isobutylene, and pentene-1; and dienes such as butadiene, 1,3-pentadiene, and isoprene); alicyclic hydrocarbon resins including alicyclic hydrocarbon resins prepared by cyclodimerizing a so-called "C4 petroleum fraction" or "C5 petroleum fraction" and subsequently polymerizing the product, polymers of cyclic diene compounds (e.g., cyclopentadiene, dicyclopentadiene, ethylidenenorbornene, and dipentene) or hydrogenated products of these polymers, and alicyclic hydrocarbon resins prepared by hydrogenating aromatic ring of the following aromatic hydrocarbon resins or aliphatic-aromatic petroleum resins; aromatic hydrocarbon resins including polymers of vinyl-containing aromatic hydrocarbons each having eight to ten carbon atoms, such as styrene, vinyltoluene, α-methylstyrene, indene, and methylindene; aliphatic-aromatic petroleum resins such as styrene-olefin copolymers; aliphatic-alicyclic petroleum resins; hydrogenated hydrocarbon resins; coumarone resins; and coumarone-indene resins.

The amount of tackifying resins can be selected within ranges of, for example, from 5 to 40 parts by weight, and preferably from 20 to 30 parts by weight, to 100 parts by weight of the base polymer.

The surfaces (adhesive faces) of the respective pressure-sensitive adhesive layers in a double-faced pressure-sensitive adhesive tape or sheet may be independently protected by a known separator (release liner) before use. In this case, the double-faced pressure-sensitive adhesive tape or sheet may have a structure (double separator structure) in which the two adhesive faces are respectively protected by two separators. However, the tape or sheet preferably has a structure (single separator structure) in which the tape or sheet is wound as a roll and the two adhesive faces are protected by one separator in common, from the viewpoints typically of waste reduction and resource savings. When the double-faced pressure-sensitive adhesive tape or sheet has a single separator structure, the separator for use herein is generally a separator in which both sides of a substrate form strippable or peelable planes (releasable surfaces) that exhibit releasability to the adhesive faces.

The separator for use herein is preferably thick so as to increase workability, such as punching quality, of the double-faced pressure-sensitive adhesive tape or sheet, because the double-faced pressure-sensitive adhesive tape or sheet has a very small total thickness. Typically, the thickness of the separator is preferably 50 µm or more, and more preferably 75 to 100 µm.

Double-faced pressure-sensitive adhesive tapes or sheets herein may be wound as a roll or be a laminate of sheets.

These double-faced pressure-sensitive adhesive tapes or sheets can be produced by forming two pressure-sensitive adhesive layers respectively on both sides of a substrate. Processes to form the two pressure-sensitive adhesive layers are not particularly limited. Exemplary processes include a coating process of applying a pressure-sensitive adhesive to a predetermined face of a substrate to form a coat, and drying and/or curing the coat according to necessity; a transfer process of applying a pressure-sensitive adhesive to a separator (release liner) to form a coat, drying and/or curing the coat according to necessity to form a pressure-sensitive adhesive layer, and attaching and transferring the pressure-sensitive adhesive layer to a predetermined face of a substrate; and a combination of these processes in which, for example, a pressure-sensitive adhesive layer on one side of a substrate is formed via a coating process, and another pressure-sensitive adhesive layer on the other side is formed via a transfer process. The coating or application of pressure-sensitive adhesives can be carried out using a common coater such as a gravure roll coater, a reverse roll coater, a kiss contact roller coater, a dip roll coater, a bar coater, a knife coater, or a spray coater.

The double-faced pressure-sensitive adhesive tapes or sheets according to the present invention have the above configurations and are thereby advantageously usable in uses in which such adhesive tapes or sheets desirably have smaller thickness and enable secure affixation between two adherends and easy removal from one of the two adherends when peeled off. The double-faced pressure-sensitive adhesive tapes or sheets are therefore advantageously usable for fixing the winding origin of a continuous strip to be wound around a core (as double-faced pressure-sensitive adhesive tapes or sheets for fixing winding origin), and usable for fixing components in miniature electronic devices (as double-faced pressure-sensitive adhesive tapes or sheets for miniature electronic devices).

It is important that a double-faced pressure-sensitive adhesive tape or sheet, if used for fixing winding origin, is arranged so that the lower-adhesive-strength pressure-sensitive adhesive layer is adjacent to or faces the core. In this case, the higher-adhesive-strength pressure-sensitive adhesive layer is naturally in contact with the continuous strip. It is also important that a double-faced pressure-sensitive adhesive tape or sheet, if used for miniature electronic devices, is arranged so that the lower-adhesive-strength pressure-sensitive adhesive layer is adjacent to a component to be reused.

In the double-faced pressure-sensitive adhesive tapes or sheets, the substrate and the respective pressure-sensitive adhesive layers may be transparent (transparent substrate and transparent pressure-sensitive adhesive layers), but at least one of the substrate and the pressure-sensitive adhesive layers may be colored. Specifically, a colored substrate and/or colored pressure-sensitive adhesive layer(s) may be used. Use of the colored substrate and/or colored pressure-sensitive adhesive layer(s) makes it easy to detect whether or not a double-faced pressure-sensitive adhesive tape or sheet has already been affixed to a core upon winding of a continuous strip around the core. This improves the working efficiency upon winding.

The color herein is not particularly limited, but is preferably a color that is readily distinguishable. Namely, when the tape or sheet is affixed to a core, the color is preferably a color that forms a sharp contrast to the color of the core. By way of example, when the core (adherend) is black, a pale color such as white or yellow is preferred as the color for coloration, and when the core (adherend) is white, typically black, blue, or red is preferred as the color for coloration.

In this case, exemplary processes for coloring the substrate include a process of coloring an entire substrate such as a film; and a process of applying a coat to a transparent substrate to color the substrate. Typically, a colored film substrate can be obtained, if the entire film substrate is colored, by adding known or common colorants such as pigments to a material resin upon film formation. Exemplary colorants include the coloring materials exemplified in Japanese Unexamined Patent Application Publication (JP-A) No. 2007-9137. The colorants may be added, for example, by mixing pellets with the material resin, which pellets have the same composition with that of the material resin, except for further containing pigments. On the other hand, a colored substrate, if formed by coating of the substrate, can be prepared by applying to the substrate a coating agent (e.g., a printing ink) further containing a known or common colorant such as a pigment. The coating procedure herein can be any of known or common coating procedures including coating by printing such as gravure printing.

On the other hand, a colored pressure-sensitive adhesive layer may be obtained by adding a known or common colorant such as a pigment to the pressure-sensitive adhesive for constituting the pressure-sensitive adhesive layer.

Additionally, a colored separator may also be used as a separator for protecting the surfaces (adhesive faces) of the respective pressure-sensitive adhesive layers in the double-faced pressure-sensitive adhesive tapes or sheets. Use of a colored separator is preferred, because the same advantages as in the use of the colored substrate and/or colored pressure-sensitive adhesive layer(s) can be obtained, and, in addition, easy detection of whether or not the separator is peeled off is enabled. When the tape or sheet has a double separator structure, a separator to be colored is not particularly limited, but it is particularly preferably a separator that will be peeled off later.

### (Roll of Continuous Strip)

A roll of continuous strip according to the present invention has a structure in which a continuous strip is wound around a core, the inner end (winding origin) of the continuous strip is fixed to the core through any of the double-faced pressure-sensitive adhesive tapes or sheets according to the present invention, and the double-faced pressure-sensitive adhesive tape or sheet is arranged so that the lower-adhesive-strength pressure-sensitive adhesive layer is adjacent to the core. The continuous strip and core will be illustrated later.

Specifically, in the roll of continuous strip, the double-faced pressure-sensitive adhesive tape or sheet is used for fixing the winding origin (inner end) of the continuous strip to the core, in such a manner that the higher-adhesive-strength adhesive face (pressure-sensitive adhesive layer surface) is affixed to the inner end of the continuous strip, and the lower-adhesive-strength adhesive face is affixed to the surface (outer face) of the core. The roll of continuous strip therefore has a structure in which the continuous strip is wound around the core while the inner end of the continuous strip is affixed to the core through the double-faced pressure-sensitive adhesive tape or sheet, and the double-faced pressure-sensitive adhesive tape or sheet is arranged so that the lower-adhesive-strength pressure-sensitive adhesive layer is adjacent to the core.

The continuous strip and core for use in the roll of continuous strip are not particularly limited and can be selected from among known articles; and a core having a special structure can also be used as the core. This is because, in the roll of continuous strip, the inner end of the continuous strip is fixed to the surface of the core through the double-faced pressure-sensitive adhesive tape or sheet, as described above.

Additionally, the roll of continuous strip can be easily produced with high degree of freeness upon fixation of the continuous strip to the core, because the roll of continuous strip employs the double-faced pressure-sensitive adhesive tape or sheet for fixing winding origin, and thereby the inner end of the continuous strip can be affixed at any position of the surface of the core.

The roll of continuous strip may be produced, for example, by a process in which the inner end of the continuous strip is fixed to the core with the double-faced pressure-sensitive adhesive tape or sheet in such a manner that the lower-adhesive-strength pressure-sensitive adhesive layer is adjacent to or faces the core, and the continuous strip is subsequently wound around the core.

(Continuous Strip)
Continuous strips for use herein are not particularly limited, as long as having a long, narrow shape. Exemplary continuous strips include continuous strips using plastic materials, of which long, narrow plastic bases (e.g., long, narrow plastic films or sheets) using plastic materials as main components are preferred. Such long, narrow plastic bases are not particularly limited but are preferably functional plastic films or sheets having a variety of functions (characteristic properties). Exemplary functional plastic films or sheets include plastic films or sheets having optical functions (optically functional plastic films or sheets).

Preferred as continuous strips for use herein are optically functional plastic films or sheets (so-called "optically functional films"). The optical functions are not particularly limited and include, for example, polarization function, refraction function, light scattering function, light reflective function, optical transparency, light energy absorptivity, optical compensation function, luminance improving function, prism function, reflection function, anti-reflection function, color filtering function, and protecting film function for optical articles. Among them, polarization function is preferred as the optical function herein. The optically functional plastic film or sheet is preferably a plastic film or sheet having polarizability (polarizing plastic film or sheet). Exemplary polarizing plastic films or sheets include film-like or sheet-like polarizers (so-called "polarizing films") used typically in displays typically of so-called "cellular phones", so-called "PDAs" (personal digital assistants), so-called "LCD TVs" (liquid crystal display televisions), and monitors.

The continuous strip may have a single-layer structure, or a multilayer structure of stacked layers. The surface of the continuous strip may have been subjected to a surface treatment according typically to the type of the continuous strip.

The length of the continuous strip is not particularly limited and may be, for example, 10 m or more (e.g., 10 to 4000 m), preferably 50 m or more (e.g., 50 to 3000 m), and more preferably 100 m or more (e.g., 100 to 2000 m).

The thickness of the continuous strip is not particularly limited but can be suitably selected within ranges of, for example, 0.5 to 500 µm, preferably 2 to 300 µm, and more preferably 5 to 200 µm. Thus, the continuous strip can be one that is very thin. As a matter of course, the continuous strip can also be one that has a thickness of greater than 500 µm.

The process to form the continuous strip is not particularly limited and can be suitably selected from among known processes for forming such a continuous strip according typically to the type of the continuous strip.

(Core)
Cores for use herein are not particularly limited, as long as they can be used in winding of continuous strips. Exemplary cores include cores using plastic materials as main components (plastic cores); cores using paper materials as main components (paper cores); and cores using metal materials as main components (metal cores). Among them, plastic cores are preferably used. Exemplary plastic materials as main components in plastic cores include polyesters such as poly(ethylene terephthalate)s, poly(ethylene naphthalate)s, poly(butylene terephthalate)s, and poly(butylene naphthalate)s; polyolefins such as polyethylenes, polypropylenes, and ethylene-propylene copolymers; poly(vinyl alcohol)s; poly(vinylidene chloride)s; poly(vinyl chloride)s; vinyl chloride-vinyl acetate copolymers; poly(vinyl acetate)s; polyamides; polyimides; celluloses; fluorine-containing resins; polyethers; polystyrene resins such as polystyrenes; polycarbonates; poly(ether sulfone)s; ABSs (acrylonitrile-butadiene-styrene copolymers); and so-called "FRPs" (fiber-reinforced plastics). Each of different plastic materials may be used alone or in combination.

The core, such as a plastic core, may be one having an elastic layer on its surface (hereinafter also referred to as an "elastic core"), so as to suppress or prevent damage to the continuous strip. Such an elastic core has a structure in which an elastic layer is arranged on the surface of a core section. Exemplary core sections include core sections using plastic materials as main components (plastic core sections); core sections using paper materials as main components (paper core sections); and core sections using metal materials as main components (metal core sections). Among them, plastic core sections are preferred. Exemplary plastic materials constituting plastic core sections are as with the plastic materials exemplified as main components in the plastic cores.

Exemplary elastic layers include elastic layers composed of rubber components (rubber layers); and elastic layers composed of elastomer components (elastomer layers). Among them, rubber layers are preferably used. Exemplary rubber components for constituting rubber layers include, but are not limited to, urethane rubbers, acrylic rubbers, butyl rubbers, nitrile rubbers, diene rubbers (e.g., styrene-butadiene rubbers), and natural rubbers. Exemplary elastomer components for constituting elastomer layers include urethane elastomers, styrenic elastomers, acrylic elastomer, polyolefinic elastomers, polyester elastomers, and polyamide elastomers. Each of different rubber components and each of different elastomer components may be used alone or in combination, respectively.

The thickness of the elastic layer, such as a rubber layer, is not particularly limited, can be suitably set according to desired characteristic properties, and can be suitably selected within ranges of, for example, from 0.05 to 3 cm, and preferably from 0.5 to 2 cm.

The way to form an elastic layer is not particularly limited. Typically, the elastic layer may be formed by a process in which a material (e.g., a rubber component) for the formation of an elastic layer is applied to the surface of the core section to form a coat, and the coat is dried or cured according to necessity; or by a process in which a previously formed sheet-like elastic article is applied to the surface of the core section and is bonded thereto typically with an adhesive according to necessity.

The diameters of the core are not particularly limited and can be suitably set according typically to the length of the continuous strip. The outer diameter of the core can be suitably selected within ranges of, for example, from 20 to 500 mm, preferably from 70 to 300 mm, and more preferably from 152 to 254 mm.

The way to form the core is not particularly limited and can be suitably selected from among known processes for the formation of cores, according to the type of the core to be formed.

### (Miniature Electronic Device)

When the double-faced pressure-sensitive adhesive tapes or sheets are used for miniature electronic devices, the miniature electronic devices are not particularly limited and include mobile communication devices (portable communication gadgets) such as so-called "cellular phones" and so-called "PHSs" (personal handyphone systems); portable accesses to information, such as so-called "PDAs" (personal digital assistants); so-called "digital cameras" (electronic still video cameras); so-called "digital video cameras" (digital camcorders); portable video game players of every kind; and portable personal computers (mobile computers; notebook computers in a broad sense), such as so-called "notebook computers" of A4 size or larger (notebook computers in a narrow sense), so-called "subnotebook computers" of about B5 size, so-called "mininotebook computers" of a size smaller than B5 size, and so-called "tablet PCs".

Such double-faced pressure-sensitive adhesive tapes or sheets for miniature electronic devices are double-faced pressure-sensitive adhesive tapes or sheets used in miniature electronic devices for any of components (of which components to be reused are preferred) therein. Accordingly, a double-faced pressure-sensitive adhesive tape or sheet according to the present invention can be used for affixing a component used in a miniature electronic device to another component or the cabinet of the miniature electronic device.

Specifically, component or components to which the double-faced pressure-sensitive adhesive tape or sheet is applied in a miniature electronic device are not particularly limited and can be any component or components that are suitably selected according to the type of the miniature electronic device. More specifically, the double-faced pressure-sensitive adhesive tape or sheet for miniature electronic devices are typically used for the fixation of reflecting sheets and diffuser sheets in displays, or for the fixation of electromagnetic interference shielding materials. In a miniature electronic device, a double-faced pressure-sensitive adhesive tape or sheet may be applied to a component of one kind or to components of two or more different kinds.

### Examples

The present invention will be illustrated in further detail with reference to several examples below. It should be noted, however, these examples are never construed to limit the scope of the present invention.

(EXAMPLE 1)
A pressure-sensitive adhesive composition for the formation of a lower-adhesive-strength pressure-sensitive adhesive layer (hereinafter also referred to as a "pressure-sensitive adhesive composition (A)") was prepared by mixing 100 parts by weight of a copolymer between 2-ethylhexyl acrylate and acrylic acid with 1.0 part by weight of an isocyanate crosslinking agent (trade name "CORONATE L" supplied by Nippon Polyurethane Industry Co., Ltd.) and 0.15 part by weight of an epoxy crosslinking agent (trade name "TETRAD C" supplied by Mitsubishi Gas Chemical Company, Inc.). The copolymer had a composition ratio (parts by weight) of 2-ethylhexyl acrylate to acrylic acid of 100:2 and a weight-average molecular weight of 50x 10⁴.

Independently, a pressure-sensitive adhesive composition for the formation of a higher-adhesive-strength pressure-sensitive adhesive layer (hereinafter also referred to as a "pressure-sensitive adhesive composition (B)") was prepared by mixing 100 parts by weight of a terpolymer of butyl acrylate, 2-ethylhexyl acrylate, and acrylic acid with 30 parts by weight of a polymerized rosin t'ackifying resin (trade name "PENSEL D-125" supplied by Arakawa Chemical Industries, Ltd.) and 2.0 parts by weight of an isocyanate crosslinking agent (trade name "CORONATE L" supplied by Nippon Polyurethane Industry Co., Ltd.). The terpolymer had a composition ratio (parts by weight) of butyl acrylate to 2-ethylhexyl acrylate and acrylic acid [(butyl acrylate):(2-ethylhexyl acrylate):(acrylic acid)] of 70:30:3 and a weight-average molecular weight of 50x 10⁴.

The pressure-sensitive adhesive composition (A) was applied to one side of a poly(ethylene terephthalate) film 2 µm thick as a substrate to give a coat, and the coat was dried or cured at 100°C for one minute to thereby form a lower-adhesive-strength pressure-sensitive adhesive layer 4 µm thick. Next, the pressure-sensitive adhesive composition (B) was applied to the other side of the substrate to give a coat, and the coat was dried or cured at 100°C for one minute to thereby form a higher-adhesive-strength pressure-sensitive adhesive layer 4 µm thick. Thus, there was prepared a double-faced pressure-sensitive adhesive tape or sheet which had a thickness extending from one of the two adhesive faces to the other adhesive face of 25 µm or less in which the two pressure-sensitive adhesive layers had different adhesive strengths.

The higher-adhesive-strength pressure-sensitive adhesive layer had an adhesive strength of 5.0 N/20 mm, and the lower-adhesive-strength pressure-sensitive adhesive layer had an adhesive strength of 0.6 N/20 mm in the double-faced pressure-sensitive adhesive tape or sheet according to Example 1.

### (Measurement of Tack)

The tack of the lower-adhesive-strength pressure-sensitive adhesive layer in the double-faced pressure-sensitive adhesive tape or sheet prepared according to Example 1 was measured in accordance with the inclined type ball tack testing method specified in JIS Z 0237 at an inclination angle of 30°, a temperature of 23°C, and relative humidity of 65%. Specifically, the specimen double-faced pressure-sensitive adhesive tape or sheet was set with the surface of the lower-adhesive-strength pressure-sensitive adhesive layer upward at the predetermined location of an inclined type ball tack device (rolling ball device) at an angle of inclined plate of 30°, and a poly(ethylene terephthalate) film for an approach table (the poly(ethylene terephthalate) film specified in JIS C 2318 of 25 µm thickness) was stuck at the predetermined location of the adhesive face of the double-faced pressure-sensitive adhesive tape or sheet so that the length of the exposed adhesive face be 100 mm. Depending on the size of a ball, the position of the center of the ball was adjusted to the ball start so that the length of the approach table constantly be 100 mm. The ball was then allowed to roll. These operations were repeated to find the maximum size ball which stopped completely within the measuring part (i.e., on the adhesive face). Three balls of the found maximum size, the next larger and smaller size balls were allowed to roll each one time (i.e., a total of three times), to confirm that the found ball is the maximum one met to the specification of measurements. Thus, the tack of the lower-adhesive-strength pressure-sensitive adhesive layer was measured.

As a result, the lower-adhesive-strength pressure-sensitive adhesive layer in the double-faced pressure-sensitive adhesive tape or sheet according to Example 1 was found to have a tack in terms of ball number 5. This demonstrates that the double-faced pressure-sensitive adhesive tape or sheet according to Example 1 has such characteristic properties as to have a tack in terms of ball number 3 or greater as measured according to the inclined type ball tack testing method specified in JIS Z 0237 at an inclination angle of 30°, a temperature of 23°C, and relative humidity of 65%.

### (COMPARATIVE EXAMPLE 1)

The pressure-sensitive adhesive composition (B) was applied to both sides of the same substrate poly(ethylene terephthalate) film 2 µm thick as in Example 1, to give coats, and the coats were dried or cured at 100°C for one minute to form pressure-sensitive adhesive layers each 4 µm thick. Thus, there was prepared a double-faced pressure-sensitive adhesive tape or sheet which had a thickness extending from one of the two adhesive faces to the other adhesive face of 25 µm or less, in which the two pressure-sensitive adhesive layers had an equal adhesive strength.

The two pressure-sensitive adhesive layers in the double-faced pressure-sensitive adhesive tape or sheet according to Comparative Example 1 each had an adhesive strength of 5.0 N/20 mm.

The tack of one of the two pressure-sensitive adhesive layers in the double-faced pressure-sensitive adhesive tape or sheet was measured by the procedure of Example 1, to find that there was no ball number applicable (N/A). Specifically, the double-faced pressure-sensitive adhesive tape or sheet according to Comparative Example 1 has such characteristic properties as to have a tack in terms of ball number less than 3, as measured according to the inclined type ball tack testing method specified in JIS Z 0237 at an inclination angle of 30°, a temperature of 23°C, and relative humidity of 65%.

(Evaluation)
Each of the double-faced pressure-sensitive adhesive tapes or sheets prepared according to Example 1 and Comparative Example 1 was used in actual production of a roll of continuous strip (polarizer). The double-faced pressure-sensitive adhesive tape or sheet according to Example 1 could satisfactorily fix the continuous strip to a core, could be easily peeled off from the core when peeled off, and helped to reduce the amount of inner portions of the roll to be discarded. In contrast, the double-faced pressure-sensitive adhesive tape or sheet according to Comparative Example 1 could not easily peeled off from the core and showed poor workability.

(EXAMPLE 2)
A colored substrate was prepared by applying a red ink (supplied by Dainichiseika Color & Chemicals Mfg. Co., Ltd., trade name "NB 300") to a poly(ethylene terephthalate) film 2 µm thick via gravure coating to give a ink layer about 1 to 2 µm thick, and drying the applied film. Next, a double-faced pressure-sensitive adhesive tape or sheet was prepared by the procedure of Example 1, except for using, as the substrate, the colored substrate instead of the poly(ethylene terephthalate) film 2 µm thick. In this process, a pressure-sensitive adhesive layer derived from the pressure-sensitive adhesive composition (B) was formed on the red ink layer.

(EXAMPLE 3)
A colored pressure-sensitive adhesive composition was prepared by mixing, with stirring thoroughly, 100 parts by weight of the pressure-sensitive adhesive composition (B) prepared in Example 1 with 10 parts by weight of a red pigment paste (supplied by Dainippon Ink & Chemicals, Inc., trade name "PASTE RED R-2321"). Next, a double-faced pressure-sensitive adhesive tape or sheet was prepared by the procedure of Example 1, except for using the colored pressure-sensitive adhesive composition instead of the pressure-sensitive adhesive composition (B).

(EXAMPLE 4)
The two adhesive faces of the double-faced pressure-sensitive adhesive tape or sheet according to Example 1 were protected by separators. The separators were each an opaque white polyester film (supplied by Toray Industries, Inc., trade name "Lumirror X20", 75 µm thick) both sides of which had been subjected to a release treatment.

The tacks of the lower-adhesive-strength pressure-sensitive adhesive layers in the double-faced pressure-sensitive adhesive tapes or sheets according to Examples 2 to 4 were measured and found to be a tack in terms of ball number 5, as in Example 1. In this connection, the separators of the double-faced pressure-sensitive adhesive tape or sheet according to Example 4 had been peeled off before measurement. Additionally, the adhesive strengths of the pressure-sensitive adhesive layers in these tapes or sheet were measured and found to be equal to that in Example 1.
The double-faced pressure-sensitive adhesive tapes or sheets prepared according to Examples 2 to 4 were used in actual production of a continuous strip (polarizer). These double-faced pressure-sensitive adhesive tapes or sheets could satisfactorily fix the continuous strip to a core, could be easily peeled off from the core when peeled off, and helped to reduce the amount of inner portions of the roll to be discarded, as in the double-faced pressure-sensitive adhesive tape or sheet according to Example 1. In addition, these double-faced pressure-sensitive adhesive tapes or sheets showed good workability. Specifically, the double-faced pressure-sensitive adhesive tapes or sheets according to Examples 2 and 3 were satisfactorily distinguishable particularly from a white core; and the double-faced pressure-sensitive adhesive tape or sheet with separators according to Example 4 was satisfactorily distinguishable particularly from a black core, and whether or not the separators had been peeled off from the tape or sheet could be easily detected. Industrial Applicability

Double-faced pressure-sensitive adhesive tapes or sheets according to the present invention are thin, can securely affix two adherends when applied, and can easily be peeled off from one of the two adherends, if needed. The double-faced pressure-sensitive adhesive tapes or sheets are therefore useful as double-faced pressure-sensitive adhesive tapes or sheets for fixing the inner end of a continuous strip to a core, which can improve the yield of the continuous strip, and which can be easily separated from the core. When used in production of a roll of continuous strip, they help to reduce the amount of inner portions of the roll to be discarded and enable the core to be reused. Thus, they are useful from the viewpoints of cost reduction and resource savings.

## Claims

1. A double-faced pressure-sensitive adhesive tape or sheet comprising a substrate and, respectively arranged on both sides thereof, two pressure-sensitive adhesive layers, wherein the thickness extending from the surface of one of the two pressure-sensitive adhesive layers to the surface of the other pressure-sensitive adhesive layer is 25 µm or less, wherein the two pressure-sensitive adhesive layers have different adhesive strengths, and wherein, out of the two pressure-sensitive adhesive layers, one having a lower adhesive strength (lower-adhesive-strength pressure-sensitive adhesive layer) has a tack in terms of ball number 3 or greater as determined according to the inclined type ball tack testing method specified in Japanese Industrial Standards (JIS) Z 0237 at an inclination angle of 30°, a temperature of 23°C, and relative humidity of 65%.

2. The double-faced pressure-sensitive adhesive tape or sheet according to claim 1, wherein the lower-adhesive-strength pressure-sensitive adhesive layer has an adhesive strength of 0.05 to 10.0 N/20 mm, as determined according to JIS Z 0237 using a SUS 304 steel plate as a test panel at a tensile speed of 300 mm/minute, a peel angle of 180°, a temperature of 23°C, and relative humidity of 65%, and wherein the other pressure-sensitive adhesive layer having a higher adhesive strength has an adhesive strength of 2.0 to 30.0 N/20 mm, as determined according to JIS Z 0237 using a SUS 304 steel plate as a test panel at a tensile speed of 300 mm/minute, a peel angle of 180°, a temperature of 23°C, and relative humidity of 65%.

3. The double-faced pressure-sensitive adhesive tape or sheet according to one of claims 1 and 2, wherein the substrate has a thickness of 10 µm or less.

4. The double-faced pressure-sensitive adhesive tape or sheet according to any one of claims 1 to 3, wherein the substrate has a thickness of 3 µm or less, and wherein each of the pressure-sensitive adhesive layers independently has a thickness of 6 µm or less.

5. The double-faced pressure-sensitive adhesive tape or sheet according to claims 1 to 4, wherein the substrate and/or at least one of the pressure-sensitive adhesive layers is colored.

6. The double-faced pressure-sensitive adhesive tape or sheet according to any one of claims 1 to 5, wherein the surface of at least one of the pressure-sensitive adhesive layers is protected by a colored separator before use.

7. The double-faced pressure-sensitive adhesive tape or sheet according to any one of claims 1 to 6, as a double-faced pressure-sensitive adhesive tape or sheet for fixing the inner end of a continuous strip to a core before winding the continuous strip around the core, wherein the double-faced pressure-sensitive adhesive tape or sheet is used so that the lower-adhesive-strength pressure-sensitive adhesive layer is adjacent to the core.

8. A roll of continuous strip, comprising a core and a continuous strip wound around the core, wherein the inner end of the continuous strip is fixed to the core through the double-faced pressure-sensitive adhesive tape or sheet of claim 7, and wherein the double-faced pressure-sensitive adhesive tape or sheet is arranged so that the lower-adhesive-strength pressure-sensitive adhesive layer is adjacent to the core.

9. The roll of continuous strip, according to claim 8, wherein the continuous strip is an optically functional plastic film or sheet.
